# EUROPÄISCHE PATENTSCHRIFT

(11) **EP 0 891 244 B1**
(45) Veröffentlichungstag und Bekanntmachung des Hinweises auf die Patenterteilung: **27.12.2000**
(21) Anmeldenummer: 97915461.4
(22) Anmeldetag: 29.03.1997
(51) Int. Cl.: B27K 3/15, B27K 3/34, B27K 3/36, B27K 3/50

(54) **FORMKÖRPER AUS IMPRÄGNIERTEM HOLZ**
SHAPED BODY MADE OF IMPREGNATED WOOD
CORPS FORME CONSTITUE DE BOIS IMPREGNE

(30) Priorität: 01.04.1996 AT 58296; 23.12.1996 CH 316696
(43) Veröffentlichungstag der Anmeldung: 20.01.1999
(73) Patentinhaber: Rettenbacher, Markus, Dipl.-Ing., A-5412 Puch/Salzburg (AT); Mundigler, Norbert, Dipl.-Ing., A-3423 St. Andrä/Wördern (AT)
(72) Erfinder: Rettenbacher, Markus, Dipl.-Ing., A-5412 Puch/Salzburg (AT); Mundigler, Norbert, Dipl.-Ing., A-3423 St. Andrä/Wördern (AT)
(74) Vertreter: Büchel, Kurt F., Dr.
(86) Internationale Anmeldenummer: EP9701603
(87) Internationale Veröffentlichungsnummer: WO9736720

(56) Entgegenhaltungen:
- WO-A-94/11167
- WO-A-95/04111
- DE-A- 3 942 136
- FR-A- 2 647 388
- NL-C- 23 392
- US-A- 1 991 752
- DATABASE WPI Section Ch, Week 9415 Derwent Publications Ltd., London, GB; Class A14, AN 94-123673 XP002036983 & JP 06 071 614 A (MOKUZAI SEINO KOGYO GIJUTSU KENKYU) , 15.März 1994
- PATENT ABSTRACTS OF JAPAN vol. 3, no. 83 (C-052), 18.Juli 1979 & JP 54 057532 A (MATSUSHITA ELECTRIC WORKS LTD), 9.Mai 1979,
- DATABASE WPI Section Ch, Week 9244 Derwent Publications Ltd., London, GB; Class C03, AN 92-364261 XP002036984 & SU 1 701 521 A (SOVIET CULTURE FUND CHUVASH SECT) , 30.Dezember 1991
- DATABASE WPI Section Ch, Week 8925 Derwent Publications Ltd., London, GB; Class A82, AN 89-238850 XP002036985 & JP 01 174 401 A (DAIKEN KOGYO KK) , 11.Juli 1989
- DATABASE WPI Section Ch, Week 8738 Derwent Publications Ltd., London, GB; Class E19, AN 87-269312 XP002036986 & SU 1 288 063 A (ARKHANGELSK FOREST INST.) , 7.Februar 1987

## Beschreibung

Die Erfindung betrifft einen Formkörper aus imprägniertem Vollholz. Schon seit altersher hat man Holz mit verschiedenen Substanzen imprägniert, hauptsächlich gegen Pilze und Insekten, zur Verringerung der Wasseraufnahme beziehungsweise Verbesserung des Quellverhaltens, so zum Beispiel mit Teeröl (für Holzpflaster), Paraffin und Wachsen, oder mit Mischungen von Montanwachs und Kunstharzlösungen (Alkydharzen), wobei aber das Problem in der Entfernung des Lösungsmittels (z.B. Trichlorethylen) aus dem imprägnierten Vollholz besteht. Zur Herstellung von Lagerscheiben hat man auch Holz mit Schmieröl imprägniert.

Besser gelingt dies, insbesondere für eine Dimensionsstabilisierung und Erhöhung der Härte, mit wasserlöslichen Phenol- oder Harnstoff-Formaldehydharzen; doch bewirken diese im allgemeinen nur eine Verzögerung, aber nicht eine Unterbindung der Quellung, hingegen aber eine Reduktion der Zugfestigkeit. Sie werden daher in der Regel nur bei Furnieren angewendet, die gegebenenfalls anschliessend als Schichtpressstoffe weiter verarbeitet werden. Ausserdem führt die Kombination von Holz mit Harnstofformaldehydharz, aber auch mit anderen Kunststoffen zu duroplastischen Werkstoffen, die nach der Formgebung und anschliessender Quervernetzung nicht mehr thermoplastisch verformt werden können, sowie nicht mehr bioabbaubar sind und daher ein Entsorgungsproblem darstellen.

Bekannt geworden ist ferner die Imprägnierung von Furnieren mit Farbstoff und Polyethylen- oder Polypropylenglykol, sowie mit einer wässrigen Lösung von Stärke, Polyvinylpyrrolidon oder Polyvinylacetat zur Herstellung von aus einzelnen Furnieren zusammengeklebten, gefärbten Schichtkörpern (JP-A54-117004 oder JP-A55-034931), aber auch die Imprägnierung nur der Schnittkante von Holz vor dem Furnierschälvorgang zwecks Kantenverfestigung, und zwar wiederum mit wässrigen Lösungen von Stärke, Gelatine, Polyvinylacetat, Natriumalginat, Polyvinylpyrrolidon, Resol, Melamin- oder Harnstoffharz, Monomeren wie Acryl- oder Metacrylsäureestern, Styrol, Vinylacetat, Acrylamid oder -nitril etc. (JP-A54-026317).

Schliesslich ist auch die Imprägnierung von Holz oder porösen Gesteinsmaterialien mit einer wässrigen Polyvinylacetatlösung unter Vakuum und anschliessend Anwendung von geringem Überdruck bekannt geworden, wobei gegebenenfalls Wachs und/oder Biocide zugesetzt werden (FR-A2505187).

Auch weitere Druckschriften befassen sich mit der Imprägnierung von Holzteilen mittels biologisch nicht abbaubarer, polymerisierbarer bzw. vernetzender Kunstharze oder Leinöl, häufig aus Lösungen, mit den angegebenen Nachteilen; dazu gehören insbesondere DE-A1-3942136, FR-A-2647388, JP-A-6071614, JP-54 057 732, WO94/11167, US-A-1991752, SU-A1-1701521, JP-A-1174401, SU-A-1288063 und NL-A-23392.

Alle diese Methoden der Herstellung imprägnierter Holzformkörper haben aber den Nachteil, dass die Entfernung der verwendeten Lösungsmittel (auch Wasser!) einerseits zeit- und energieaufwendig ist, andererseits wiederum einen - wenn auch geringfügiger als vorher - porösen Formkörper hinterlässt.

Die Erfindung hat sich daher die Aufgabe gestellt, einen imprägnierten, biologisch abbaubaren Vollholz-Formkörper zu schaffen, dessen Poren weitestgehend gefüllt sind, und der aber verhältnismässig leicht und ohne besondere Nachbearbeitung hergestellt werden kann, und die Nachteile der herkömmlichen Kombinationen aus Holz und Kunststoffen in Bezug auf Porosität, Bioabbaubarkeit und Thermoplastizität überwindet. Diese Aufgabe wird erfindungsgemäss erstmalig in überraschender Weise durch die Kombination der im Kennzeichen des Anspruches 1 angeführten Merkmale gelöst. Besonders vorteilhafte Weiterbildungen der Erfindung sind in den Kennzeichen der abhängigen Ansprüche beschrieben.

Als Naturharz wird insbesondere ein Monomer aus der Gruppe Tallharz, Dammar, Kopal; aber auch Balsamharz oder Tallöl; als Öl, insbesondere geblasenes (voroxidiertes) Leinöl oder Holzöl, gegebenenfalls mit Zusatz eines Trockenmittels (Sikkativs); als Fettsäureester insbesondere ein solcher, der bei der Tallölaufarbeitung zu Tallharz anfällt, verwendet.

Im Sinne der Erfindung sollen als Polymere, Naturharze, Öle bzw. Fettsäureester insbesondere solche gewählt werden, die bei der Beladungstemperatur flüssig sind, und vorzugsweise das Holz nicht angreifen. Besonders bevorzugt sind Substanzen, die unter der Temperatur, bei der das Holz angegriffen wird, verhältnismässig niedrig viskos sind. Der Fachmann wird eine solche Mischung von Imprägnierungsmitteln und allfälligen Zusatzstoffen wählen, dass ein zu imprägnierender Vollholzteil in Abhängigkeit von seiner Porigkeit innerhalb angemessener Zeit - gegebenenfalls unter Anwendung von Vakuum und/oder Druck - den gewünschten Durchdringungsgrad erreicht. Unter "angegriffen" ist im Sinne der Erfindung jede unerwünschte Veränderung der Eigenschaften zu verstehen, insbesondere Verfärbung; Zersetzung durch chemische Reaktion, insbesondere bei extremen pH-Wert-Änderungen; Quellung oder Schrumpfung (soferne unerwünscht); Porenbildung etc. Es ist selbstverständlich, dass manche erfindungsgemässe, thermoplastische Werkstoffe zur Imprägnierung bestimmter Holzarten geeignet sein mögen, für andere nicht. Z.B. mögen geringfügige Verfärbungen bei dünkleren Hölzern noch akzeptabel sein; gewisse Hölzer mögen gegen bestimmte pH-Wert-Änderungen unempfindlicher sein als andere, etc.

In den letzten Jahren sind auf Grund der Umweltdiskussion eine Menge verschiedener biologisch abbaubarer Werkstoffe auf der Basis von Naturstoffen wie auch fossilen Quellen entwickelt worden, von denen viele sogar hydrophilen Charakter zeigen und wie viele Naturstoffe und insbesondere auch Holz in der Lage sind, Wasser aufzunehmen und abzugeben. Diese Werkstoffe enthalten entsprechend der relativen Umgebungsfeuchte gewisse Prozentsätze an Wasser und sind daher zur Kombination besser geeignet als Kunststoff im herkömmlichen Sinn. Ihr hydrophiler Charakter erleichtert auch das Eindringen in die Holzmatrix, wobei die Eigenschaften von Holz nicht völlig überdeckt sondern nur ergänzt werden.

Für biologisch abbaubare Polymere sind beispielhaft folgende Substanzen zu nennen: Polyhydroxybuttersäuren, Polycaprolactone, Polymilchsäuren, Polyester auf der Basis von Diolen und Dicarbonsäuren, Polyamide, Polyesterurethane, chemisch modifizierte natürliche Polymere wie z.B. Celluloseacetate.

Weitere Zusatzstoffe, z.B. verschiedene Fette, Öle, Wachse, aber auch Lignin oder Alkohole, insbesondere zu den Naturharzen, Ölen, bzw. Fettsäureestern, werden verwendet, um im fertig imprägnierten Vollholz-Formkörper bestimmte Eigenschaften zu erzeugen, ohne die Thermoplastizität oder Bioabbaubarkeit wesentlich einzuschränken. Insbesondere können auch gehärtete oder modifizierte, tierische und pflanzliche Fette, z.B. hydrierte Pflanzenfette, epoxidierte Öle, Wollfett, Talg, aber auch Salze verschiedener Fettsäuren, wie z.B. Stearinsäure, Behensäure, Laurinsäure etc. zum Einsatz gelangen.

Schliesslich können auch verschiedenste Salze, wie z. B. Phosphate, Borate, Sulfate, Chloride, Silikate mitverwendet werden, indem sie mit der Schmelze in das Holzgefüge eingebracht werden. Sie haben einen positiven Einfluss auf die Verringerung des Quell- und Schwindverhaltens, wirken aber auch flammhemmend und/oder fungizid.

Auch Glycerin wird als "Lösungsmittel", Weichmacher oder Feuchthaltemittel eingesetzt; Alkali- und Erdalkaliresinate wirken als Trockenstoff, aber auch als Benetzungsmittel und Emulgatoren und fördern dadurch das Eindringverhalten der Harze ins Holz.

Manche der Harze werden bevorzugt in Kombination mit Wachs und/oder einem trocknenden Öl verwendet, die bei Zimmertemperatur hart bzw. fest und sogar spröde sind bzw. werden, bei höheren Temperaturen jedoch erweichen und vorzugsweise anschliessend ein signifikantes Viskositätsgefälle aufweisen, so dass noch bei Temperaturen die Beladung stattfinden kann, bei welchen Holz noch gar nicht oder nur geringfügig angegriffen wird. Die Sprödigkeit einiger der genannten Substanzen wird durch die feine Verteilung in der Holzmatrix kompensiert.

Die Viskosität der Imprägnierungszusammensetzung bei der Beladungstemperatur sollte unter 20 dPas, zweckmässigerweise unter 10 dPas (der Viskosität von Glycerin bei Raumtemperatur), insbesondere unter 1 dPas liegen (Wasser hat bei Raumtemperatur 0.01 dPas). Während die Poren in Vollholz in der Grössenordnung von einigen µm liegen, haben die erfindungsgemässen Harze oder Polymere eine Grösse von einigen nm. Je kleiner die Moleküle sind, desto rascher und tiefer dringen sie in das Holz ein. Die grössten - insbesondere polymeren - Teilchen werden bei der jeweiligen Behandlungstemperatur und -dauer nur in die obersten Schichten der Oberfläche eindringen; genau das bietet aber den Vorteil, dass die Oberflächeneigenschaften des erfindungsgemässen Formkörpers - insbesondere hinsichtlich Härte und Optik (z.B. Polierfähigkeit!) - verbessert werden, ohne die termoplastische Verformbarkeit zu beeinträchtigen. Darüber hinaus wird das Ausdiffundieren der kleineren Moleküle bei erhöhter Temperatur aus dem Inneren wirkungsvoll verhindert.

Als Wachse werden bevorzugt solche aus der Natur, wie z.B. Carnaubawachs, Bienenwachs oder Montanwachs, verwendet. Wachse zeigen noch günstigere Verarbeitungsbedingungen, wie eine meist niedrigere Schmelztemperatur und ein noch stärkeres Viskositätsgefälle bei Temperaturerhöhung. Die Kombination von Wachs und Harz zeigt gute Verarbeitungs- und Endprodukteigenschaften, da die unangenehme Eigenschaft von preisgünstigem Balsamharz, bei Zimmertemperatur klebrig zu sein, durch die Verwendung von Wachsen kompensiert wird. Andererseits neigen Wachse allein bei etwas erhöhten Verwendungstemperaturen zum Ausschwitzen, was wiederum durch die in der Mischung anwesenden Naturharze unterdrückt wird.

Lein- und Holzöl sind vor der "Trocknung" (Härtung durch Polymerisation) schon bei Zimmertemperatur flüssig, wobei sich die Viskosität bei Temperaturerhöhung weiter verringert. Ein bei Zimmertemperatur eine Viskosität von 90 dPas aufweisendes Leinöl zeigt bei einer Temperaturerhöhung von nur 30°C einen Viskositätsabfall auf 15 dPas. Diese geringe Viskosität in Verbindung mit der geringen Molekülgrösse - da es sich ja ebenfalls vorerst um ein Monomer handelt - unterstützt den Imprägnierungsvorgang erheblich. Die Kombination von solchem Öl mit Harz erlaubt die Herstellung nahezu linoleumartiger Formkörper in einer nativen Holzmatrix.

Um die Polymerisationsreaktion (Trocknung) der verwendeten Öle katalytisch zu beschleunigen, werden als Trockenmittel sogenannte Metallseifen auf Basis eines oder mehrerer Metalle (in Kombination) eingesetzt, insbesondere Cobalt-, Zink- und Manganresinate, -oktoate, -linoleate und -naphthenate.

Überraschend war bei der Kombination von bioabbaubaren, zum Teil hydrophilen Thermoplasten und dem hydrophilen Duroplasten Holz, dass es zu Produkten, Formteilen oder Werkstoffen kommt, bei denen die charakteristischen Eigenschaften von Holz, inbesondere hinsichtlich der Wasseraufnahme bzw. -abgabe, Bioabbaubarkeit, sowie der bekannt exzellenten mechanischen Eigenschaften nicht verloren gingen. Dem Holz wurden die Eigenschaften Thermoplastizität, verbesserte Oberfläche und in einzelnen Fällen raschere Bioabbaubarkeit hinzugefügt; dadurch sind für solche Formteile völlig neue Einsatzgebiete eröffnet worden.

Die Quellung und Schwindung von Holz ist eine Eigenschaft, die seinen Einsatz in vielen Fällen wesentlich einschränkt, und wird durch das erfindungsgemässe Verfahren um mindestens 50 % verringert. Dadurch verringern sich die aufwendigen Massnahmen in der Verarbeitung, z.B. Mehrfachverleimungen, Nut- u. Federverbindungen und das Berücksichtigen von Dehnungsfugen.

Je höher die für die Durchtränkung der Vollholzteile gewählten Temperaturen liegen, je besseres Vakuum vor der Imprägnierung bzw. je höherer Luft-, Gas- oder Dampfdruck während oder nach der Imprägnierung angelegt werden kann, umso schneller und vollständiger erfolgt das Durchdringen der Holzmatrix mit den thermoplastischen Werkstoffen.

Für die Herstellung der Formkörper kann Holz der unterschiedlichsten Art verwendet werden. Ob mit Hart- oder Weichholz, mit sehr dünnwandigen oder stärkeren Holzteilen gearbeitet wird, hängt vorwiegend von den Anforderungen des Endproduktes ab. Z.B. werden Eukalyptus- und Pappelholz als schnellwachsende Plantagenhölzer vorwiegend für die Zellstofferzeugung oder als Energielieferanten verwendet. Ihr schneller Wuchs ergibt nur eine geringe Gesamt- und Oberflächenhärte. Durch die erfindungsgemässe Behandlung können diese Hölzer aber auch für höherwertige Anwendungen, z.B. im Fussboden- und Fensterbereich, herangezogen werden und daher teurere und immer weniger verfügbare, hochwertige Naturhölzer ersetzen.

Ein gutes Beispiel für die Verbesserung der Dauerhaftigkeit von Holz ist auch die Buche, die mit den beschriebenen Schmelzen leicht zu beladen ist und dabei eine wesentliche Verbesserung der Dauerhaftigkeit, Standfestigkeit und auch der Resistenz gegen Mikroorganismen erreicht.

Holz ist von Natur aus nur sehr wenig thermoplastisch. Die erfindungsgemässen Formkörper hingegen sind den herkömmlichen Techniken der thermoplastischen Umformung, wie Prägen, Pressen, Biegen, Formen, ähnlich leicht zugänglich wie herkömmliche Kunststoffteile. Dieses thermoplastische Umformen erfolgt weitgehend ohne Zerstörung der inneren Holzstruktur, so dass in bestimmten Fällen sogar die Holzmaserung vollkommen erhalten bleibt.

Durch die Auswahl der Art und Menge der Werkstoffe und allfälliger Zusatzstoffe, sowie der Verfahrensparameter, wie Temperatur und Druck, können die Eigenschaften der erfindungsgemässen Vollholz-Formkörper in weiten Grenzen variiert werden. Dazu gehört z.B. die Geschwindigkeit des biologischen Abbaus, der z.B. durch die Verwendung von langsam abbaubaren Stoffe, wie z.B. Celluloseacetat, gegenüber Holz sogar noch verzögert werden kann. Aber auch das spezifische Gewicht der Formteile kann in einem weiten Bereich verändert werden. Dies geht von sehr geringer Beladung von leichtem Holz (Dichte 0,2 t/m3) bis hin zu einer völlig beladenen Holzmatrix mit ca. 1,5 t/m3. Ein oftmals gewünschter Effekt, vor allem bei Weichholzteilen, ist die drastische Erhöhung der Oberflächenhärte durch die Einlagerung eines erfindungsgemässen Werkstoffes in die Holzmatrix, so dass von Natur aus weiche Hölzer auch für hochwertige Fussböden geeignet sind.

Um den Nachteil der leichten Entflammbarkeit der mit Harzen, Wachsen und eventuell Ölen beladenen Holzteile zu bogegnen, werden der Beladungsschmelze Flammhemmungsmittel, wie z.B. Ammoniumphosphat und Zinkborat beigefügt, wobei Glycerin als Lösungsvermittler dienen kann.

Eine mögliche Verfahrensweise wäre das vollständige Eintauchen des - vorzugsweise vorher evakuierten - Holzteiles in den geschmolzenen Werkstoff und das sofortige Anlegen eines Überdrucks, was wesentlich rascher zu dem gewünschten Ergebnis einer vollständigen und gleichmässigen Verteilung des thermoplastischen Werkstoffes in der Holzmatrix führt. Eine weitere Verbesserung des Imprägnierungsverfahrens kann dadurch erreicht werden, dass der Vollholz-Formkörper vorgetrocknet wird, wodurch der flüssige Werkstoff auch in tiefere, vorher von Wassermolekülen besetzte Holzschichten eingesaugt wird.

Die so erhaltenen Formstücke lassen sich wie Holz verarbeiten, mit der zusätzlichen Eigenschaft der termoplastischen Verformbarkeit, obwohl sie noch immer leicht über die biologische Abbaubarkeit entsorgt werden können.

Den fertigen eventuell thermoplastisch nachverformten Teilen steht ein weites Einsatzgebiet offen. Den Einsatzbereichen Verpackung, Möbelbau, Fussboden, Fahrzeug- und Holzbau, Innenausbau, Spielwaren können noch beliebig viele Beispiele hinzugefügt werden.

### Beispiel 1:

Eine 120 mm lange, 80 mm breite und 25 mm dicke Weichholzplatte der Dichte 420 kg/m3 wird auf 150°C erhitzt und in ein geschmolzenes, 150°C warmes, niedermolekulares Polycaprolacton der Fa. Union Carbide eingetaucht; während 15 min wird Unterdruck angelegt. Anschliessend wird die Platte aus der Schmelze entnommen und 30 min lang in einer Druckkammer einem Gasdruck von 10 bar ausgesetzt, um den polymeren, biologisch abbaubaren Werkstoff in tiefere Holzschichten eindringen zu lassen. Die Platte kann bei 170°C dauerhaft verformt werden, wobei Wasserdampf unterstützend wirkt.

### Beispiel 2:

Tallharz (Sacotan® 85 der Firma Krems Chemie, Erweichungstemperatur 80 - 85 °C) wird in einem offenen Gefäss aufgeschmolzen und auf eine Temperatur von 155 °C gebracht. In diese heisse Harzschmelze werden Holzteile der Länge: 250 mm, Breite: 80 mm, Dicke 15 mm eingebracht. Dieses Einbringen erfolgt in einem perforierten Korb, der die einzelnen Hölzer voneinander trennt, sodass die gesamte Oberfläche jedes Holzteils von flüssigem Harz umgeben ist, die Holzteile unter dem Flüssigkeitsspiegel gehalten werden, und das Entnehmen aus der heissen Harzschmelze möglich ist.

Nach dem Einbringen der Hölzer beginnt infolge der Erwärmung in den Holzteilen die enthaltene Feuchtigkeit zu verdampfen und die enthaltene Luft zu entweichen. Dieser Prozess dauert ca. 15 Minuten, während die Temperatur der Harzlösung bei 150 °C gehalten wird. Anschliessend wird das Gefäss verschlossen und ein Gasdruck von 9 bar angelegt, der das Harz in tiefe Holzschichten einbringen soll. Nach 1 Stunde Druckzeit wird entlastet und die beladenen Hölzer werden aus dem noch immer flüssigen Harz (125 °C) entnommen. Die während dieser Behandlung aufgenommene Menge an Harz kann durch Differenzwägung bestimmt werden:

| Holzart | Gewicht vor der Beladung in Gramm | Gewicht nach der Beladung in Gramm | % Harz vom Gesamtgewicht | % Harz vom Holzgewicht |
|---|---|---|---|---|
| Esche | 136 | 198 | 31 | 46 |
| Birke | 259 | 400 | 35 | 54 |
| Eiche | 152 | 169 | 10 | 11 |
| Kiefer | 266 | 466 | 42 | 75 |
| Fichte | 99 | 119 | 17 | 20 |
| Erle | 188 | 368 | 49 | 96 |
| Linde | 113 | 158 | 28 | 39 |
| Buche | 139 | 210 | 34 | 51 |
| Tanne | 284 | 293 | 3 | 3 |
| Lärche | 196 | 201 | 2 | 2 |
| Ahorn | 284 | 436 | 34 | 53 |
| Kirsche | 361 | 411 | 12 | 14 |

Das Harz hatte sich in der Holzmatrix homogen verteilt. Das Holz war den klassischen Holzbearbeitungsverfahren gut zugänglich. Die Farbveränderungen durch Temperaturbelastung und Harzeintrag (Veränderung der Lichtstreuung durch Hohlraumauffüllung) am Holz sind je nach Holzart unterschiedlich, aber doch bei jeder Holzart feststellbar. Der fertig beladene Holzteil (gehobelt) wird noch als leicht klebrig beurteilt.

Beim Einbringen des zwar darrtrockenen, aber doch mit einer Restfeuchte von ca. 10 % behafteten Holzes in die Harzschmelze wurde ein gewisses, durch das Verdampfen des Restwassers und das Austreiben der überschüssigen Luft bedingtes Aufschäumen beobachtet, das einem "Fritiervorgang" in der Lebensmittelindustrie nicht unähnlich ist. Dieses Verhalten kann reduziert oder ganz beseitigt werden, wenn - vorzugsweise vor dem Eintauchen der Holzteile in die Harzschmelze - im Behandlungsgefäss Unterdruck angelegt und/oder die Holzteile vorgeheizt werden.

### Beispiel 3:

Unter Beibehaltung der wesentlichen Versuchsbedingungen gemäss Beispiel 2 wurde lediglich das verwendete Holz vor dem Einbringen in die Harzschmelze auf ca. 150 °C vorgewärmt. Dies bewirkt einerseits ein Vortrocknen des Holzes, und andererseits ist die im Holz enthaltene Luft der Temperatur entsprechend entwichen.

Das so vorbehandelte Holz zeigte kein oder nur sehr geringes Aufschäumen mehr, und der Druckkessel konnte sofort nach dem Einbringen des Holzes verschlossen werden. Die Befürchtung, dass dieser Trocknungsvorgang die Beladungsmenge an Harz verringern könnte, konnte nicht bestätigt werden. Die festgestellten Beladungsmengen waren nahezu ident mit denjenigen nach Beispiel 2.

### Beispiel 4:

Um die Verfärbung des Holzes durch die Wärmebelastung zu minimieren, wurde ein Balsamharz verwendet, das bei 60 - 65 °C zu erweichen beginnt und bei 115 °C eine geringe Viskosität aufweist. Das Holz wurde eine Stunde bei 115°C vorbehandelt und in die Harzschmelze gleicher Temperatur eingebracht. Eine sehr kurze Beladungszeit von nur 15 min, allerdings bei 15 bar Druck, verringerte die Verfärbung des Holzes deutlich. Die Beladungsmenge an Harz entsprach weitgehend den Daten des Beispiels 2. Etwas unangenehm war allerdings, dass die harzbeladenen Holzteile auch noch bei Zimmertemperatur etwas klebrig sind, was wohl mit dem niedrigen Schmelzpunkt des Balsamharzes zusammenhängt.

### Beispiel 5:

Als Negativbeispiel aus dem Stand der Technik wurden die in Beispiel 1 beschriebenen Holzteile unter ähnlichen Bedingungen wie in Beispiel 2, jedoch nur mit Carnaubawachs, oder einem Montanwachs (Schmelzpunkt: 75°C) der Fa. Schlickum, beladen. Die Schmelzetemperatur betrug 155 °C; das Holz wurde 60 Minuten bei 130 °C vorgetrocknet; die Temperatur bei der Holzentnahme betrug 120 °C.

Die Menge an aufgenommenem Wachs entspricht in etwa denjenigen, die bei Harz festgestellten worden waren. Bei Erhitzungsversuchen der wachsbeladenen Hölzer konnte allerdings ab etwa 80 °C eine unangenehm rasche Abgabe des flüssigen Wachses aus der Holzmatrix beobachtet werden.

### Beispiel 6:

Um die verbleibenden Nachteile der reinen Wachs- oder reinen Harzimprägnierung des Holzes zu minimieren, wurden die beiden Werkstoffe miteinander kombiniert. Erstaunlicherweise sind Wachse und Harze uneingeschränkt miteinander kombinierbar; sie bilden eine gemeinsame, klare Schmelze, die einen gemeinsamen Erweichungspunkt aufweist. Sie sind auch durch Abkühlung nicht mehr voneinander zu trennen.

66 % Tallharz (Sacotan® 85) und 34 % Montanwachs (Iscoblend® 207 der Firma Schlickum) wurden gemeinsam aufgeschmolzen und ergaben eine Erweichungstemperatur von ca. 80 °C. Die weiteren Bedingungen, um Holz mit dieser Kombination zu beladen, entsprachen den bei den vorangegangenen Beispielen angeführten Bedingungen. Die Beladungsmenge war mit den in der Tabelle des Beispiels 2 angegebenen Werten vergleichbar.

Die so erhaltenen beladenen Hölzer vereinen die positiven Eigenschaften der nur harz- oder nur wachsbeladenen Varianten. Der klebrige Eindruck von nur mit Harz beladenem Holz konnte durch den Einsatz von Wachs ausreichend abgeschwächt werden; andererseits ist das "Ausschmelzen" von reinen wachsbeladenen Hölzern bei Temperaturerhöhung entscheidend verringert.

| Holzart | Brinellhärte vor der Beladung HB // (N/mm²) | Brinellhärte nach der Beladung HB // (N/mm²) | Verringerung der Quellung und Schwindung in % |
|---|---|---|---|
| | parallel zur Faser | | |
| Esche | 60 | 90 | 50 |
| Kiefer | 40 | 70 | 40 |
| Erle | 30 | 75 | 60 |
| Buche | 70 | 95 | 70 |
| Fichte | 30 | 55 | 30 |

### Beispiel 7:

Um die unvollständige und lange andauernde Oxidation des Leinöls zu beschleunigen, werden Harze bzw. Metallsalze verschiedener Harzsäuren und andere Trockenmittel zur Verbesserung der Härteeigenschaften eingesetzt. Die Rohstoffzusammensetzung der biologisch abbaubaren Werkstoffmischung war 70 % Leinöl, 14 % Zinkresinat, 15 % Kolophonium und 1% Cobaltoktoat. Sie wurde auf 150 °C erhitzt bis sich eine klare Lösung ergab. Die weiteren Arbeitsbedingungen der Holzbeladung entsprachen den vorangegangenen Versuchen.

Das Ziel dieser Rohstoffmischung war es, die Rohstoffe, die zur Linoleumherstellung verwendet werden, noch flüssig bzw als thermoplastisch Stoffe in die Holzmatrix eindringen zu lassen und so die Eigenschaften von Holz und Linoleum miteinander zu verbinden bzw. quasi das Linoleum im Ho entstehen zu lassen.

### Beispiel 8:

Eine Rohstoffmischung bestehend aus 30 % Leinöl, 15 % Zinkresinat, 15 % Kolophonium, 20 % Carnaubawachs und 19 % biologisch abbaubarer Polyeste (Skygreen®) und ca. 0.5% Manganresinat wird auf 150 °C erhitzt, so dass eine klare, aber gefärbte Lösung entsteht. Die sonstigen Beladungsbedingungen entsprechen dem Beispiel 2. Die Rohstoffkombination ergab Endprodukte mit folgenden Eigenschaften:
· Ständig weitere Trocknung des Leinöls auch bei Verletzung der Holzoberfläche.
· Der Harz- und Wachsanteil verbessert die Härte des Holzes.
· Der Wachsanteil vermindert die Klebrigkeit des Leinöls und des Harzes.
· Der Polyester verbleibt auf Grund seiner makromolekularen Struktur vorwiegend an der Oberfläche des Holzes.

Die Hölzer werden auf ihre Brinellhärte senkrecht zur Faserrichtung in Anlehnung an DIN EN 10003-1 und auf ihre Biegefestigkeit in Anlehnung an DIN 52186 geprüft:

| | Brinellhärte | | Biegefestigkeit | |
|---|---|---|---|---|
| | N/mm² | Zunahme % | N/mm² | Zunahme % |
| Kiefer vorher | 6.5 | | 118 | |
| Kiefer nachher | 11.1 | 69,5 | 137 | 15.4 |
| Erle vorher | 11.9 | | 104 | |
| Erle nachher | 32.4 | 171.0 | 143 | 37.7 |
| Buche vorher | 22.8 | | 162 | |
| Buche nachher | 42.2 | 84.7 | 179 | 10.8 |
| Esche vorher | 23.9 | | 149 | |
| Esche nachher | 38.1 | 59.4 | 159 | 7.0 |

Die beladenen Holzstücke wurden in eine Presse eingebracht, in der bereits auf 140°C vorgeheizte Prägeplatten lagen. Die Presse wurde langsam geschlossen und 2 min bei einem Pressdruck von 50 bar gehalten. Die so nachgeformten Teile hatten ein 2 mm tief eingeprägtes Waffelmuster bei unzerstörter, geschlossener Oberfläche und unbeschädigten Kanten. Auf diese Weise thermoplastisch verformte Hölzer können z.B. als Treppenbelag verwendet werden.

### Beispiel 9:

Um das Eindringen des Polyesters noch zu verbessern und die Möglichkeit der Beladung auch von längeren Hölzern zu gewährleisten, wurde die Oberfläche der Holzteile dieses Beispiels kurz vor deren Einbringen in die geschmolzenen Rohstoffe mit feinsten Nadeln bis zu einer Tiefe von etwa 3 mm perforiert. Die Behandlungsbedingungen, wie auch die Rohstoffzusammensetzung, entsprachen dem vorangegangenen Beispiel. Die Eindringtiefe auch von höhermolekularen, thermoplastischen Werkstoffen kann durch feinste Perforation genau gesteuert werden. Die Perforation kann so ausgeführt werden, dass makroskopisch keine Oberflächenverletzung sichtbar ist. Mit dieser Möglichkeit ist die "Holzbeladung" auch für wesentlich grössere Holzdimensionen und für von Natur aus schlecht beladbare Hölzer durchführbar.

### Beispiel 10:

Möchte man Vollholz vollständig mit thermoplastischen Werkstoffen beladen, werden die Vollholzteile vor der Beladung evakuiert; ohne den Unterdruck aufzuheben wird wie im Beispiel 9 verfahren, indem die dort beschriebene Schmelze in den evakuierten Beladungskessel eingebracht wird. Anschliessend wird bei 150°C 1 h lang ein Beladungsdruck von 9 bar gehalten, wodurch die Schmelze sich besonders gleichmässig auch im Inneren des Formkörpers verteilt.

### Beispiel 11:

Möchte man Vollholz nicht quantitativ beladen, sondern nur die Zellwände modifizieren, um vor allem das Quell- und Schwindverhalten zu beeinflussen, nicht aber die Härte wesentlich zu verändern, geht man folgendermassen vor:

Die Bedingungen und die Rohstoffmischung entsprechen dem Beispiel 8. Das noch unbehandelte, in das Beladungsgefäss eingebrachte Holz wird vor dem Einbringen der geschmolzenen Werkstoffe während 15 min einem Luftdruck von 4 bar ausgesetzt und anschliessend ohne Druckabbau wie in Beispiel 8 fortgefahren. Der Einpressdruck wird auf 15 bar eingestellt und während 100 min aufrecht gehalten. Das "Vorspannen" der Holzteile unter Druck bewirkt, dass nach der Entspannung durch das Entweichen der komprimierten Luft auch die flüssigen Rohstoffkomponenten mitausgepresst werden und so die Hohlraumbefüllung verhindert wird. Lediglich die Zellwände werden mit den Substanzen beladen. Eine spätere plastische Umformung der Vollholzteile ist dadurch noch leichter durchführbar, insbesondere dann, wenn nur die Oberfläche durch Prägung -also durch Verdrängen bzw. Verdichten bestimmter Teile- weiter gestaltet werden soll.

### Beispiel 12:

Besonders bevorzugt ist auch die Kombination aus Naturharz, Wachs und einem biologisch abbaubaren Polyester, z.B. in Form eines Polylaktids. Die Beladungsschmelze besteht aus 65 % Erkazit 415 (Fa. Kraemer), 25 % IscoBlend 231 (Fa. Schlikum) und 10 % EcoPLA (Fa. Cargill). Die Beladungsbedingungen entsprechen den vorangegangenen Beispielen. Das Polylaktid legt sich als geschlossener Überzug über die Holzoberfläche mit nur geringer (2 mm) Eindringtiefe.

### Beispiel 13:

Das sogenannte Fixieren der "gequollenen" Holzstruktur durch das Verdrängen des Wassers und das gleichzeitige Einlagern von thermoplastischen Werkstoffen in die Zellstruktur des Holzes ergibt ein noch wesentlich verringertes Quell- und Schwindverhalten. Um dies zu erreichen wird folgende Vorgangsweise gewählt:

Die Holzteile werden vor dem Einbringen in die Schmelze so konditioniert, dass der sogenannte Fasersättigungspunkt (Wassergehalt je nach Holzart zw. 12 u. 20 Gew. % Wasser) erreicht wird. Die Schmelzezusammensetzung entspricht dem Beispiel 9. Die Schmelzetemperatur beträgt 140 Grad Celsius. Die Holzteile werden ohne Vortemperierung rasch in die Schmelze eingebracht. Das Druckgefäss wird rasch geschlossen, ohne dass noch erhebliche Mengen an Wasserdampf entweichen können. Anschliessend wird sofort ein Druck von 6 bar angelegt. Dieser etwas geringere Verfahrensdruck wird gewählt, da die Holzmatrix durch das Vorhandensein von erheblichen Wassermengen leicht verformt (Kollabieren von Holz) werden könnte.

Nach 120 Minuten wird das Holz bei unveränderter Schmelzetemperatur entnommen. Bei der Entnahme ist ein starkes Austreten der überschüssigen Luft, aber vor allem des Wasserdampfes zu beobachten. Durch das zur gleichen Zeit stattgefundene Verdrängen des Wassers und Ersetzen durch thermoplastische Werkstoffe und der Fixierung des Quellzustandes infolge Erstarrung, konnte das Quell- und Schwindverhalten aller getesteter Holzarten (Buche, Erle, Birke, Ahorn) um mindestens 75 % verringert werden.

## Patentansprüche

1. Formkörper aus imprägniertem Vollholz, dadurch gekennzeichnet, dass er mit wenigstens einer, im wesentlichen lösungsmittelfreien und thermoplastischen Substanz oder Mischung als Imprägnierungsmittel imprägniert wurde, die ein biologisch abbaubares Polymer, ein Naturharz und/oder ein(en) Fettsäureester ist bzw. enthält, und die bei einer Beladungstemperatur zwischen etwa 115 und etwa 155°C eine Viskosität von unter 20 dPas, zweckmässigerweise unter 10 dPas, insbesondere unter 1 dPas aufweist.

2. Formkörper nach Anspruch 1, dadurch gekennzeichnet, dass das biologisch abbaubare Polymer aus der Gruppe der folgenden Substanzen stammt: Polyhydroxybuttersäuren, Polycaprolactone, Polymilchsäuren, Polyester auf der Basis von Diolen und Dicarbonsäuren, Polyamide, Polyesterurethane; chemisch modifizierte, natürliche Polymere wie z.B. Celluloseacetate.

3. Formkörper nach Anspruch 1 oder 2, dadurch gekennzeichnet, dass das Naturharz aus der Gruppe der folgenden Substanzen stammt: Tallharz, Dammar, Kopal und Balsamharz.

4. Formkörper nach einem der vorhergehenden Ansprüche, dadurch gekennzeichnet, dass der Fettsäureester aus der Tallölaufarbeitung zu Tallharz stammt.

5. Formkörper nach einem der vorhergehenden Ansprüche, dadurch gekennzeichnet, dass das Imprägnierungsmittel ausserdem ein trocknendes oder halbtrocknendes (härtendes) Öl, insbesondere geblasenes (voroxidiertes) Leinöl oder Holzöl, gegebenenfalls mit Zusatz eines Trockenmittels (Sikkativs) enthält.

6. Formkörper nach einem der vorhergehenden Ansprüche, dadurch gekennzeichnet, dass das Imprägnierungsmittel ausserdem wenigstens eine der folgenden Substanzen enthält: Wachse, insbesondere Carnaubawachs, Bienenwachs, Montanwachs; Lignin, höhere Alkohole; gehärtete oder modifizierte, tierische und pflanzliche Fette, z.B. hydrierte Pflanzenfette und epoxidierte Öle; Wollfett, Talg; Salze verschiedener Fettsäuren, wie z.B. der Stearinsäure, Behensäure, Laurinsäure; Flammhemmungsmittel - letzteres gegebenenfalls unter Zusatz geringer Mengen eines Lösungsvermittlers, wie z.B. Glycerin.

7. Formkörper nach einem der vorhergehenden Ansprüche, dadurch gekennzeichnet, dass das Imprägnierungsmittel aus
- 10-etwa 60 Gew.% Naturharz;
- 10-40, vorzugsweise 15-35 Gew.% Wachs;
- 10-50, vorzugsweise 20-40 Gew.% trocknendem Öl;
- 0.25-20 Gew.% Trockenmittel, insbesondere Cobalt-, Zink- und Manganresinate, -oktoate, -linoleate und -naphthenate; und- 10-30, vorzugsweise 15-25 Gew.% eines biologisch abbaubaren Polymeren besteht.

8. Verfahren zur Herstellung eines Formkörpers nach einem der vorhergehenden Ansprüche, dadurch gekennzeichnet, dass der Holzteil - gegebenenfalls auf eine Temperatur von 100-150°C vorgewärmt - in die aus dem Imprägnierungsmittel gebildete Schmelze eingetaucht und 10-120, vorzugsweise 30-90 Minuten unter Druck und Temperatur belassen, sowie anschliessend aus der Schmelze entfernt, gegebenenfalls von ihr oberflächlich befreit, und schliesslich ausgekühlt wird.

9. Verfahren nach Anspruch 8, dadurch gekennzeichnet, dass die Schmelze mit dem Holzteil unter Vakuum gesetzt und/oder anschliessend unter einen Überdruck von 1-100, insbesondere 2-20 bar gebracht wird.

10. Verwendung eines Formkörpers nach einem der Ansprüche 1 bis 7 für die Herstellung thermoplastisch verformbarer Vollholzteile.

## Claims

1. Shaped body comprising impregnated solid wood, characterized in that it was impregnated with, as an impregnating agent, at least one essentially solvent-free and thermoplastic substance or mixture which is or contains a biodegradable polymer, a natural resin and/or a fatty ester, and which has a viscosity of less than 20 dPas, expediently less than 10 dPas, in particular less than 1 dPas, at a loading temperature between about 115 and about 155°C.

2. Shaped body according to Claim 1, characterized in that the biodegradable polymer originates from the group consisting of the following substances: polyhydroxybutyric acids, polycaprolactones, polylactic acids, polyesters based on diols and dicarboxylic acids, polyamides, polyesterurethanes; chemically modified, natural polymers, such as, for example, cellulose acetates.

3. Shaped body according to Claim 1 or 2, characterized in that the natural resin originates from the group consisting of the following substances: tall resin, dammar, copal and balsam resin.

4. Shaped body according to any of the preceding Claims, characterized in that the fatty ester originates from the working up of tall oil to give tall resin.

5. Shaped body according to any of the preceding Claims, characterized in that the impregnating agent additionally contains a drying or semidrying (setting) oil, in particular blown (preoxidized) linseed oil or wood oil, optionally with the addition of a drying agent (siccative).

6. Shaped body according to any of the preceding Claims, characterized in that the impregnating agent additionally contains at least one of the following substances: waxes, in particular carnauba wax, bees' wax, montan wax; lignin, higher alcohols; hardened or modified, animal and vegetable fats, for example hydrogenated vegetable fats and epoxidized oils; wool fat, tallow; salts of different fatty acids, such as, for example, of stearic acid, behenic acid, lauric acid; flame retardants - the latter optionally with the addition of small amounts of a solubilizer, such as, for example, glycerol.

7. Shaped body according to any of the preceding Claims, characterized in that the impregnating agent consists of
- 10-about 60% by weight of natural resin;
- 10-40, preferably 15-35, % by weight of wax;
- 10-50, preferably 20-40, % by weight of drying oil;
- 0.25-20% by weight of drying agent, in particular cobalt, zinc and manganese resinates, octanoates, linoleates and naphthenates; and
- 10-30, preferably 15-25, % by weight of a biodegradable polymer.

8. Process for the production of a shaped body according to any of the preceding Claims, characterized in that the wood part is preheated to a temperature of 100-150°C, immersed in the melt formed from the impregnating agent and left there for 10-120, preferably 30-90, minutes under pressure and with heat, and then removed from the melt, optionally freed superficially from said melt and finally cooled.

9. Process according to Claim 8, characterized in that the melt with the wood part is subjected to a vacuum and/or then brought to a superatmospheric pressure of 1-100, in particular 2-20, bar.

10. The use of a shaped body according to any of Claims 1 to 7 for the production of solid wood parts which can be moulded by a thermoplastic method.

## Revendications

1. Corps profilé constitué de bois massif imprégné, caractérisé en ce qu'il a été imprégné avec au moins une substance ou mélange, pratiquement exempte de solvant et thermoplastique, à titre d'agent d'imprégnation, qui est ou contient un polymère dégradable biologiquement, une résine naturelle et/ou un ester d'acide gras et qui présente, à une température de chargement comprise entre environ 115 et environ 155°C, une viscosité inférieure à 20 dPas, de manière appropriée inférieure à 10 dPas, en particulier inférieure à 1 dPas.

2. Corps profilé selon la revendication 1, caractérisé en ce que le polymère décomposable biologiquement provient du groupe des substances suivantes: acides polyhydroxybutyriques, polycaprolactones, acides polylactiques, polyester à base de diols et d'acides bicarboniques, polyamides, polyesteruréthannes; polymères naturels, modifiés chimiquement, tel que par exemple acétate de cellulose.

3. Corps profilé selon la revendication 1 ou 2, caractérisé en ce que la résine naturelle est issue du groupe des substances suivantes : résine d'huile du pin, dammar, copal et résine tacamahaca.

4. Corps profilé selon l'une des revendications précédentes, caractérisé en ce que l'ester d'acide gras provient du traitement du tallol pour obtenir de la résine d'huile de pin.

5. Corps profilé selon l'une des revendications précédentes, caractérisé en ce que l'agent d'imprégnation contient en outre une huile séchante ou semi-séchante (durcissante), en particulier de l'huile de lin ou de l'huile de bois soufflée (préoxydée), le cas échéant avec addition d'un agent séchant (siccatif).

6. Corps de forme selon l'une des revendications précédentes, caractérisé en ce que l'agent d'imprégnation contient en outre l'une des substances suivantes: cire, en particulier cire de carnauba, cire d'abeille, cire minérale; lignine, alcools supérieurs; graisses durcies ou modifiées, animales et végétales, par exemple graisses végétales hydrogénées et huiles époxydées; graisses de suint, suif, sels de différents acides gras, tel que par exemple acide stéarique, acide de Ben, acide laurique; agents retardateur de combustion - ces derniers le cas échéant avec addition de faibles quantités d'un agent de solubilisation, tel que par exemple la glycérine.

7. Corps profilé selon l'une des revendications précédentes, caractérisé en ce que l'agent d'imprégnation est constitué de:
- 10 à environ 60 % en poids de résine naturelle;
- 10-40, de préférence 15-35 % en poids de cire;
- 10-50, de préférence 20-40 % en poids d'huile séchante;
- 0,25-20 % en poids d'agents séchants en particulier de résinates, octoates, linoléates et naphthénates de cobalt, zinc et manganèse; et 10-30, de préférence 15-25 % en poids, d'un polymère décomposable biologiquement.

8. Procédé de fabrication d'un corps profilé selon l'une des revendications précédentes, caractérisé en ce que la partie en bois - le cas échéant préchauffée à une température de 100-150°C - est immergée dans la masse fondue constituée de l'agent d'imprégnation, et laissée sous pression et sous température pendant une durée de 10-120 de préférence 30-90 minutes, ainsi qu'ensuite enlevée de la masse en fusion, le cas échéant débarrassée de celle-ci en surface et, enfin, refroidie.

9. Procédé selon la revendication 8, caractérisé en ce que la masse fondue est placée sous vide avec la partie en bois et/ou est ensuite placée sous une surpression de 1-100, en particulier 2-20 bar.

10. Utilisation d'un corps profilé selon l'une des revendications 1 à 7, pour la fabrication de pièces en bois massif, déformables par voie thermoplastique.
